# EUROPÄISCHE PATENTSCHRIFT

(11) **EP 1 831 323 B1**
(45) Veröffentlichungstag und Bekanntmachung des Hinweises auf die Patenterteilung: **26.02.2014**
(21) Anmeldenummer: 05826378.1
(22) Anmeldetag: 21.12.2005
(51) Int. Cl.: B32B 15/08

(54) **VERWENDUNG EINES EIN- ODER DOPPELSEITIGEN KLEBEBANDS ZUM SCHUTZ VON ELEKTROCHROMENSCHICHTSYSTEMEN AUF SPIEGELN**
USE OF A SINGLE OR DUAL-SIDED ADHESIVE TAPE FOR PROTECTING ELECTROCHROME LAYER SYSTEMS ON MIRRORS
UTILISATION D'UNE BANDE ADHESIVE A UNE OU DEUX FACES PERMETTANT DE PROTEGER DES SYSTEMES A COUCHE ELECTROCHROMIQUE DEPOSES SUR DES MIROIRS

(30) Priorität: 21.12.2004 DE 102004062770
(43) Veröffentlichungstag der Anmeldung: 12.09.2007
(73) Patentinhaber: TESA SE, 20253 Hamburg (DE)
(72) Erfinder: BUNDE, Bernd, 20253 Hamburg (DE); BURMEISTER, Axel, 22527 Hamburg (DE); BHANDARI, Sabine, 20457 Hamburg (DE); HIMMELSBACH, Peter, 21614 Buxtehude (DE)
(86) Internationale Anmeldenummer: PCT/EP2005/057059
(87) Internationale Veröffentlichungsnummer: WO 2006/067197

(56) Entgegenhaltungen:
- EP-A- 0 241 217
- US-A- 2 804 416
- US-A- 3 891 486
- US-A- 4 666 762
- US-A1- 2002 081 444

## Beschreibung

Die Erfindung beschreibt die Verwendung eines Klebebands zum Schutz von Elektrochromenschichtsystemen auf Spiegeln mit einem mehrschichtigen Träger, der eine Barrierewirkung gegen Sauerstoff und Wasserdampf sowie gegen andere Schadgase aufweist, sowie mit einer Klebemasse, die das elektrochrome Schichtsystem eines Spiegels nicht in seiner Funktion beeinflusst und dennoch mit dem Spiegel einen festen Verbund bildet.

Bei Nachtfahrten kommt es durch nachfolgende Fahrzeuge immer wieder zur Blendung des Fahrzeugführers über die im Fahrzeug installierten Rückspiegel.
Diese Blendung ist nicht nur störend, sondern beinhaltet ein großes Gefahrenpotential, weil der Fahrzeugführer in seiner Konzentration gestört wird und vor allem weil er durch die Blendung den vor ihm liegenden Verkehr nicht mehr richtig wahrnehmen und einschätzen kann.

Bei Fahrzeuginnenspiegeln wurde dieses Problem bislang mit dem Einsatz von Prismenspiegel gelöst, welche mechanisch von einer Tagesposition in eine Nachtposition verstellbar sind. Diese manuelle Verstellung der jeweiligen Spiegelposition führt unweigerlich zur Ablenkung des Fahrers und birgt darüber hinaus die Gefahr, den Spiegel unabsichtlich zu verstellen.
Bei Außenspiegel ist darüber hinaus der Einsatz von Prismenspiegel nicht möglich.

Es wurde demzufolge eine Möglichkeit gesucht, Innen- und Außenspiegel automatisch abzudunkeln.

Bekannt sind in diesem Zusammenhang zum einen Flüssigkristallspiegel und zum anderen elektrochrome Spiegel.

In DE 35 26 973 A1 wird ein blendfreier Flüssigkristallspiegel zur Verwendung als Innenspiegel in Fahrzeugen beschrieben. Danach ist auf einem Trägersubstrat folgender Aufbau realisiert:
- transparente Elektrode aus zum Beispiel Indium-Zinnoxid (ITO)
- Siliziumnitridschicht
- Polyimid-Orientierungsschicht
- Flüssigkristalle
- Polyimid-Orientierungsschicht
- Siliziumnitridschicht
- Aluminiumschicht als Reflektor und Elektrode und abschließend
- Trägersubstrat.
Als Trägersubstrat werden dabei verschiedene Glastypen vorgeschlagen.
Wird nun zwischen den beiden Elektroden ein elektrisches Feld angelegt, dunkelt der Spiegel ab.
Flüssigkristallspiegel besitzen jedoch einige Nachteile. So bergen sie die Gefahr von Doppelbildern und Austreten der Flüssigkristalle bei Beschädigung. Ebenso sind die vorgeschlagenen Aufbauten durch die Verwendung zweier Glasscheiben, die den obigen Schichtaufbau einkapseln, sehr schwer und tiefbauend.

In DE 37 84 536 A1 wird zur Lösung des Problems ein elektrochromes Abdunkeln vorgeschlagen durch Verwendung elektrochromer Festkörpermaterialien. Elektrochromie beschreibt die Änderungen der optischen Eigenschaften von Molekülen (zum Beispiel der optischen Absorption) durch ein äußeres oder im System vorhandenes lokales elektrisches Feld. Die Elektrochromie beruht auf der Beeinflussung der Elektronenzustände durch elektrische Felder. Der Elektrochromie umfasst dabei die Verwendung von Schichten aus elektrochromen Material, das sich in Reaktion auf eine angelegte Spannung verdunkelt. Bestehende elektrochrome Materialien bleiben in Reaktion auf eine anfängliche Spannungseingabe abgedunkelt. Sie hellen in Reaktion auf eine neutralisierende Spannung wieder auf. Das Maß der Aufhellung oder Abdunkelung hängt direkt von der angelegten Spannung ab.
Es wird folgender beispielhafter Aufbau für den Spiegel offenbart:
- Glasscheibe
- transparente Elektrode aus zum Beispiel Indium-Zinnoxid (ITO)
- elektrochrome Schicht (1) aus Nickelhydroxit
- Isolierschicht mit Tentalpentoxit
- elektrochrome Schicht (2) aus Wolframoxid
- leitende Reflektorschicht wie Aluminium

In DE 199 08 737 A1 wird gelehrt, dass es für die Langzeitstabilität eines elektrochromen Elements unabdingbar ist, den elektrochromen Schichtaufbau vor in der Umgebung vorhandenen Gasen ebenso zu schützen wie die Abwanderung von flüchtigen Bestandteilen aus dem elektrochromen Schichtaufbau zu verhindern. Eine Möglichkeit sei danach, die Kapselung der Elektrochromenschichten durch zwei Glassubstrate zu bewerkstelligen.
In der notwendigen Kapselung des Schichtsystems ist auch der Grund zu vermuten, dass sich auf dem Markt nur mit zwei Glasscheiben geschützte elektrochrome Spiegelsysteme durchsetzen konnten.
Da Fahrzeugspiegel zum Teil biradial gekrümmt sein müssen, ist die Kapselung durch zwei Glasscheiben, die beide den gleichen Krümmungsradius aufweisen müssen, technisch äußerst schwierig zu realisieren. Ein weiteres Problem besteht darin, die Kapselung durch die zwei Glasscheiben ohne schädliche Luftblasen zu füllen. Die Lösung hierfür stellt sich als sehr aufwendig dar und ist beispielsweise in EP 0 613 039 A1 beschrieben.
Die Kapselung weist neben den schon erwähnten Nachteilen des hohen Gewichtes sowie der großen Bautiefe bei der Verwendung im Bereich der Fahrzeugspiegel also weitere Nachteile auf.

Mit der DE 299 17 320 U ist Klebeband bekannt geworden, das diffusionsdicht ist, eine hohe Weiterreißfestigkeit aufweist und den Anforderungen des Brandschutzes entspricht. Dies wird erreicht, indem das Trägermaterial aus einem Aluminium-Polyester-Verbundmaterial besteht. Dabei ist durch die Aluminiumfolie eine Wasserdampfdiffusionssperre gegeben und die Polyesterfolie garantiert eine verbesserte Weiterreißfestigkeit, so dass das Klebeband unter Zugspannung verklebt werden kann.

Des Weiteren zählen aluminisierte Polyesterfilme, die einseitig klebend ausgerüstet sind, zum Stand der Technik. Derartige Bänder werden beispielsweise zur Ansatzverklebung oder Endloskleben von kunststoffbeschichteten Tapeten eingesetzt.

Die US 6,413,645 A beschreibt einen eine Sperrschicht beinhaltenden Aufbau, wobei die Sperrschicht insbesondere aus Metalloxiden oder Metallnitriden besteht. Aufgedampfte Aluminiumschichten, die eine Sperrwirkung gegen Luft oder Wasserdampf erzielen, sind insbesondere auf dem Verpackungssektor verbreitet. Beispielsweise sei die DE 196 23 751 A genannt.

Aus der US 2002/081444 A1, und der US 3,891,486 A sind Klebebänder bekannt, in denen eine metallische Schicht aus einer dampfphasenabgeschiedenen Aluminiumschicht vorhanden sind.
In der US 4,666,762 A wird ein Klebeband offenbart, das als Träger einen mehrschichtigen Aufbau aus einer oberen und einer unteren Schicht aufweist, wobei als obere Schicht eine Harzabmischung vorgesehen ist, die zwingend ein Fluor- oder Silikonharz enthalten muss.

Der Erfindung liegt die Aufgabe zugrunde, ein Klebeband zur Verfügung zu stellen, das einen einfach zu handhabenden, einen leichten und einen nicht zu dicken Schutz für flächenförmige Funktionsschichten wie elektrochrome Schichten, elektrolumeszierende Schichten und/oder OLEDs (Organic Light Emitting Devices, organische Kunststoffe als Leuchtschicht für Handy- und Kameradisplays) bietet, insbesondere für die aus der DE 37 84 536 A1 bekannten Spiegel.

Gelöst wird diese Aufgabe durch ein Klebeband, wie es im Hauptanspruch niedergelegt ist. Gegenstand der Unteransprüche sind dabei vorteilhafte Weiterbildungen des Klebebands sowie bevorzugte Anwendungsfelder des erfindungsgemäßen Klebebands.

Demgemäß besteht die Erfindung in der Verwendung eines Klebebands zum Schutz von Elektrochromenschichtsystemen auf Spiegeln mit einem mehrschichtigen Träger, bestehend aus zumindest einem oberen und einem unteren Folienteil, der jeweils von zumindest einer Kunststofffolie gebildet wird, wobei die Kunststofffolie des oberen Folienteils aus Polyester, Polyolefin, PUR, PVC, PVDC, PEN, PAN, EVOH, PA oder PA mit Nanokomposits besteht, sowie einem zwischen dem oberen und dem unteren Folienteil befindlichen metallischen Teil, der aus einer metallischen Schicht in Form einer Metallfolie aus insbesondere Aluminium gebildet wird, wobei auf der freiliegenden Seite des unteren Folienteils eine Klebemasse aufgebracht ist.

Die metallische Schicht dient dabei im erfindungsgemäßen Klebeband als Barriereschicht, hält also korrosionsfördernde Substanzen wie Wasser, Wasserdampf, Sauerstoff, Schwefeldioxid und Kohlendioxid vom zu schützenden Gut (insbesondere den flächenförmigen Funktionsschichten) fern.
Die Durchlässigkeit der metallischen Schicht ist dabei insbesondere auf folgende Werte beschränkt.
- Durchlässigkeit von O₂ < 0,1 g/m²/24h, insbesondere < 0,01 g/m²/24h, ganz insbesondere < 0,005 g/m²/24h
   (gemessen bei 23°C und 50% relativer Feuchte)
- Durchlässigkeit von H₂O < 0,1 g/m²/24h, insbesondere < 0,01 g/m²/24h, ganz insbesondere < 0,005 g/m²/24h
   (gemessen bei 37,8°C und 90% relativer Feuchte)

In einer ersten vorteilhaften Ausführungsform der Erfindung weist die metallische Schicht eine Dicke von 18 µm bis 50 µm auf, insbesondere 18 bis 25 µm.
Die metallische Schicht kann auch aus einer gewalzten Metallfolie bestehen. Dann weist die metallische Schicht vorzugsweise eine Dicke von 5 µm bis 30 µm auf.

Als Metalle können gewählt werden Silber, Kupfer, Gold, Platin, Aluminium und Aluminiumverbindungen, Zinn, Nichrom, NIROSTA, Titan, Metalloxide wie Cadmiumoxide, Zinnoxide, Zinkoxide, Magnesiumoxide. Diese Aufzählung ist dabei als nicht abschließend zu betrachten, sondern der Fachmann kann weitere hier nicht explizit genannte Metallschichten wählen, ohne den Erfindungsgedanken zu verlassen.

Vorteilhafte Ausführungsformen des Klebebands sind wie folgt aufgebaut.

Der obere Folienteil ist eine Kunststofffolie aus Polyester, die metallische Schicht eine Aluminiumschicht und/oder der untere Folienteil eine Kunststofffolie aus Polyolefinen, bevorzugt Polypropylen, oder Polyester.

Der obere Folienteil ist eine Kunststofffolie aus Polyolefinen, bevorzugt Polypropylen, die metallische Schicht eine Aluminiumschicht und/oder der untere Folienteil eine Kunststofffolie aus Polyester.

Weiter bevorzugt ist die Polyesterfolie mit der metallischen Schicht versehen, indem diese darauf aufgedampft ist.

Weiter vorzugsweise werden die Folienteile jeweils von einem Laminat aus Kunststofffolien gebildet, bevorzugt ein Laminat aus einer Polyesterfolie sowie aus einer Polyolefinfolie.
Die Kunststofffolien werden mit Bindemitteln (Laminierharzen) wie Epoxid-, Melaminharzen, Thermoplasten usw. verklebt.

Bevorzugt werden 10 µm bis 40 µm dicke Polyesterfolien sowie 20 µm bis 120 µm dicke Polyolefinfolien.

Weiterhin können auch drei- oder mehrschichtige Laminate zum Einsatz kommen, ohne den Erfindungsgedanken zu verlassen.

In einer besonders bevorzugten Ausführungsform bestehen die beiden Folienteile jeweils aus einem Laminat aus einer Polyesterfolie sowie aus einer Polyolefinfolie, bevorzugt Polypropylenfolie, und sind angeordnet, dass der Träger einen symmetrischen Aufbau um den bevorzugten Aluminium-Folienkern aufweist.
Der symmetrische Aufbau sorgt für eine erhöhte thermische Stabilität. Desgleichen wird die Planlage des Klebebands in der Verwendung deutlich verbessert.

Des Weiteren können auf dem oberen Folienteil weitere Schichten angeordnet sein, gewählt aus der Gruppe Kunststofffolien, metallisierte Kunststofffolien, Metallfolien. Beispielhaft seien weitere Aufbauten des Trägers genannt, die sich als vorteilhaft erwiesen haben.
- unterer Folienteil Polyesterfolie
- oberer Folienteil Polypropylenfolie
- metallische Schicht Aluminiumschicht, die auf die Polyesterfolie des unteren Folienteils aufgebracht ist,
   wobei auf dem oberen Folienteil folgende weitere Schichten in der angegebenen Reihenfolge aufgebracht sind:
- Polypropylenfolie
- Polyesterfolie mit aufgebrachter Aluminiumschicht, wobei die Aluminiumschicht derart angeordnet ist, dass diese an der Polypropylenfolie anliegt.
- unterer Folienteil Laminat aus einer Polypropylen- und einer Polyesterfolie, wobei das Laminat derart angeordnet ist, dass die Klebemasse auf die Polypropylenfolie aufgebracht ist,
- oberer Folienteil Polyesterfolie
- metallische Schicht Aluminiumschicht, die auf die Polyesterfolie des unteren Folienteils aufgebracht ist,
   wobei auf dem oberen Folienteil folgende weitere Schichten in der angegebenen Reihenfolge aufgebracht sind:
- zweite Aluminiumschicht, die auf der Polyesterfolie des oberen Folienteil aufgebracht ist, zweite Polypropylenfolie, wobei die zweite Aluminiumschicht derart angeordnet ist, dass diese an der zweiten Polypropylenfolie anliegt

Als Kunststofffolie werden bevorzugt Polyester und Polypropylen eingesetzt.
Daneben zeigen auch Folien aus zum Beispiel PUR, PP, PE, PVC, PVDC, PEN, PAN, EVOH und PA, PA mit Nanokomposits hervorragende Eigenschaften.
Bei PA mit Nanokomposits handelt es sich um ein mit Schichtsilicat gefülltes PA. Diese Teilchen haben eine plättchenförmige Struktur ähnlich wie Talkum. Im Gegensatz zu Talkum ist die Teilchengröße erheblich kleiner (Nanometerbereich). Diese Teilchen werden bei der Extrusion ausgerichtet und bilden eine Schichtstruktur. Die Teilchen selbst sind wie Glas völlig undurchlässig für Gase. Die Gase werden beim Durchdringen der Folie behindert, wodurch die verbesserte Barrierewirkung entsteht. Die Schichtstruktur bildet eine Art Labyrinth welches die Gase und Aromen passieren müssen. Aufgrund der geringen Teilchengröße sind die optischen Eigenschaften der Folie nicht beeinträchtigt.

Bevorzugt werden für die Kunststofffolie(n) 10 µm bis 160 µm dicke Folien.

Der Vorteil an Polyester besteht darin, dass eine Folie daraus gute Barriereeigenschaften aufweist. Des Weiteren sorgt die Folie für eine Temperaturstabilität des Klebebands, zuzüglich einer erhöhten mechanischen Stabilität.

In einer weiteren vorteilhaften Ausführungsform der Erfindung ist das Klebeband beidseitig mit einer Klebemasse ausgerüstet, so dass auch auf dem Folienteil eine weitere Klebemasse vorhanden ist.

Vorzugsweise basiert die Klebemasse auf Acrylatpolymeren, auf Acrylatblockcopolymer aus Lösung beschichtet, auf einer Acrylatdispersion oder auf Polyethylenvinylacetatpolymeren.
Weiter vorzugsweise handelt es sich um eine Selbstklebemasse.

Acrylatdispersionen sind bekannt und werden sowohl für Klebemassen von Klebebändern als auch für Klebemassen von Etiketten in großen Mengen eingesetzt. Die Acrylatdispersionen enthalten Partikel aus Acrylatpolymeren, die dispers in der wässrigen Phase der Dispersion verteilt sind. Die Herstellung von Acrylatdispersionen erfolgt üblicherweise in wässrigem Medium durch Polymerisation geeigneter Monomere. Die Herstellung kann sowohl mittels Batchprozess als auch durch Zudosierung einer oder mehrerer Komponenten während der Polymerisation erfolgen. Beim Batchprozss werden alle benötigten Komponenten gleichzeitig vorgelegt.

Die Eigenschaften der Acrylatdispersionen und der entsprechenden Klebemassen wird überwiegend durch die Auswahl der Monomere und das erzielte Molekulargewicht bestimmt. Die wichtigsten Monomere sind n-Butylacrylat, 2-Ethylhexylacrylat und Acrylsäure. Geeignete Monomerbausteine sind beschrieben in "Acrylic Adhesives", Donatas Satas in Handbook of Pressure Sensitive Adhesive Technology, Second Edition, edited by Donatas Satas, Van Nostrand Reinhold New York, pp. 396-456.

Verwendete Acrylatdispersionen enthalten insbesondere [jeweils Gew.-%]
0 bis 10 % Acrylsäure-Einheiten
0 bis 100 % n-Butylacrylat-Einheiten
0 bis 100 % 2-Ethylhexylacrylat-Einheiten.

In einer bevorzugten Ausführung werden Acrylatdispersionen mit 0,5 bis 3 % Acrylsäure-Einheiten verwendet. In einer weiteren bevorzugten Ausführung werden Acrylatdispersionen mit 0,5 bis 3 % Acrylsäure-Einheiten und 99,5 bis 90 %, besonders bevorzugt 99,5 bis 96 %, n-Butylacrylat-Einheiten verwendet. Ein weiteres Beispiel für erfindungsgemäße Acrylatdispersionen sind Acrylatdispersionen mit 80 bis 90 % 2-Ethylhexylacrylat-Einheiten und 8 bis 20 % n-Butylacrylat-Einheiten.

Die Acrylatdispersionen können zusätzlich weitere Monomer-Einheiten enthalten, durch die beispielsweise die Glasübergangstemperatur und die Vernetzbarkeit gesteuert werden kann. Beispiele sind Methylacrylat, Ethylacrylat, Methylethylacrylat, Maleinsäureanhydrid, Acrylamid, Glycidylmethacrylat, Isopropylacrylat, n-Propylacrylat, Isobutylacrylat, n-Octylacrylat sowie die entsprechenden Methacrylate dieser Acrylate. Die Acrylatdispersionen enthalten üblicherweise 0 bis 10 % dieser zusätzlichen Monomereinheiten, entweder werden ausschließlich eine zusätzliche Monomereinheit oder Mischungen derselben verwendet.

Die erzielte Glasübergangstemperatur hängt von den eingesetzten Monomeren ab. Die für die erfindungsgemäßen Klebemassen verwendeten Acrylatdispersionen weisen im getrockneten Zustand Glasübergangstemperaturen, insbesondere zwischen -80 °C und - 15 °C, bevorzugt zwischen -75 °C und -25 °C und besonders bevorzugt zwischen -55 °C und -35 °C auf.

Der Feststoffgehalt der Acrylatdispersionen liegt insbesondere zwischen 30 und 70 Gew.-%, bevorzugt zwischen 45 und 60 Gew.-%.
Beispielhaft seien die Acrylatdispersionen Primal PS 83d, Primal PS 90 der Firma Rohm & Haas genannt.

Weitere Monomere, die für die Verwendung von nicht klebenden Acrylatdispersionen geeignet sind, werden vorzugsweise als wahlweise zusätzliche Monomere zusammen mit den Estern der Acrylsäure und/oder Methacrylsäure copolymerisiert. Beispiele sind Acrylamid, Glycidylmethacrylat, Hydroxyethylmethacrylat, Dimethylaminoethylmethacrylat, Vinylacetat, Styrol, Maleinsäureanhydrid. In EP 0 375 215 B1 von der Firma ICI werden solche Dispersionen zum Beispiel beschrieben.
Falls erwünscht, kann die Dispersion weitere Zusätze enthalten, wie zum Beispiel Füllstoffe, oder Vernetzungsmittel. Geeignete Vernetzungsmittel können Epoxydharze, Aminderivate wie beispielsweise Hexamethoxymethylmelamin und/ oder Kondensationsprodukte von einem Amin, zum Beispiel Melamin, Harnstoff mit einem Aldehyd, zum Beispiel Formaldehyd sein. Um nicht klebende Polyacrylatdispersionen zu erhalten hat sich gezeigt, dass es günstig ist weitere Stoffe gegebenenfalls zuzugeben, die zum Beispiel mit den Carboxylgruppen des Polymers reagieren. Beispiele dafür sind Aziridine, wie Ethylenimin, Propylenimin.

Die zur Herstellung der Klebebänder verwendeten Klebemassen können weitere Komponenten enthalten. Beispiele sind Harze, Weichmacher, Farbstoffe, Entschäumer und Verdickungsmittel sowie weitere Zuschlagstoffe zum Einstellen des gewünschten rheologischen Verhaltens. Modifikationen von Acrylatdispersionen sind bekannt und beispielsweise beschrieben in "Modification of Acrylic Dispersions", Alexander Zettl in Handbook of Pressure Sensitive Adhesive Technology, Second Edition edited by Donatas Satas, Van Nostrand Reinhold New York, pp. 457 -493.

Wässrige Harzdispersionen, das heißt Dispersionen von Harz in Wasser, sind bekannt. Herstellung und Eigenschaften sind beispielsweise beschrieben in "Resin Dispersions", Anne Z. Casey in Handbook of Pressure Sensitive Adhesive Technology, Second Edition, edited by Donatas Satas, Van Nostrand Reinhold New York, pp. 545 - 566.

Harzdispersionen von Kohlenwasserstoffharzen und modifizierten Kohlenwasserstoffharzen sind ebenfalls bekannt und werden beispielsweise von Firma Hercules BV unter dem Handelsnamen Tacolyn angeboten (Beispiel Tacolyn 4177).

Geeignet sind Harzdispersionen auf Basis von Kohlenwasserstoffharzen oder modifizierten Kohlenwasserstoffharzen mit einem Erweichungspunkt zwischen 50 °C und 100 °C. Die Klebemasse kann beispielsweise 5 bis 28 Gew.-% der Harzdispersionen enthalten. Der Feststoffgehalt der Harzdispersionen liegt üblicherweise zwischen 40 und 70 %.

Der Klebemasse können Harzdispersionen auf Basis von Mischungen verschiedener Kohlenwasserstoffharze, sowie von Mischungen von Kohlenwasserstoffharzen mit anderen bekannten Harzen, zugegeben werden. Möglich sind beispielsweise Mischungen von Kohlenwasserstoffharzen mit geringen Mengen von Harzen auf Basis von Kolophonium oder modifiziertem Kolophonium oder Phenolharzen, anderen Naturharzen, Harzestern oder Harzsäuren.

Der Klebemasse können weiterhin weichmachende Komponenten wie Weichharze, Flüssigharze, Öle oder andere bekannte Komponenten wie beispielsweise alkoxylierte Alkylphenole zugegeben werden. Alkoxylierte Alkylphenole sind bekannt und beispielsweise beschrieben in US 4,277,387 A und EP 0 006 571 A. Die Verwendung von alkoxylierten Alkylphenolen als Weichmacher wurde u.a. vorgeschlagen in "Modification of Acrylic Dispersions", Alexander Zettl in Handbook of Pressure Sensitive Adhesive Technology, Second Edition, edited by Donatas Satas, Van Nostrand Reinhold New York, p. 471.

Die Eigenschaften der alkoxylierten Alkylphenole werden durch den Alkylrest und überwiegend durch den Aufbau der Polyglykoletherkette bestimmt. Bei der Herstellung kann sowohl Ethylenoxid als auch Propylenoxid verwendet werden. In einer besonderen Ausführung wird propoxyliertes Alkylphenol verwendet. Bevorzugt sind wasserunlösliche alkoxylierte Alkylphenole. Weiterhin bevorzugt sind alkoxylierte Alkylphenole mit einem Siedepunktpunkt größer 100 °C, bevorzugt größer 130 °C und besonders bevorzugt größer 200 °C.

Die Klebemasse kann durch Einsatz von Vernetzern in Richtung auf höhere Scherfestigkeit optimiert werden. Auswahl und Anteil der Vernetzer ist dem Fachmann bekannt. Vernetzer für Acrylatdispersionen sind grundsätzlich bekannt und beispielsweise beschrieben in "Acrylic Adhesives", Donatas Satas in Handbook of Pressure Sensitive Adhesive Technology, Second Edition, edited by Donatas Satas, Van Nostrand Reinhold New York, pp. 411 bis 419.

Vernetzer auf Basis von Isocyanat sind grundsätzlich geeignet, aber wegen der begrenzten Topfzeiten und des erhöhten Aufwands bezüglich Arbeitssicherheit nicht bevorzugt. Ein Beispiel für Vernetzer auf Basis von Isocyanat ist Basonat F DS 3425 X (BASF).

Bevorzugt sind isocyanatfreie Vernetzer, beispielsweise Vernetzer auf Basis von Salzen mehrfunktioneller Metalle. Diese sind grundsätzlich bekannt und werden beispielsweise in US 3,740,366 A, US 3,900,610 A, US 3,770,780 A und US 3,790,553 A beschrieben. Besonders geeignet sind Vernetzer auf Basis von Zinkkomplexen, die mit Carboxylgruppen kovalente und/oder komplexartige Bindungen ausbilden können.

Des Weiteren hat sich als Klebemasse eine solche auf Acrylathotmelt-Basis als geeignet erwiesen, die einen K-Wert von mindestens 20 aufweist, insbesondere größer 30, erhältlich durch Aufkonzentrieren einer Lösung einer solchen Masse zu einem als Hotmelt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der beschriebenen Massen ist darin zu sehen, dass diese einen hohen K-Wert und damit ein hohes Molekulargewicht aufweisen. Dem Fachmann ist bekannt, dass sich Systeme mit höheren Molekulargewichten effizienter vernetzen lassen. Damit sinkt entsprechend der Anteil an flüchtigen Bestandteilen.
Die Lösung der Masse kann 5 bis 80 Gew.%, insbesondere 30 bis 70 Gew.% Lösungsmittel enthalten.
Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt. In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.
Die Klebemasse auf Acrylathotmelt-Basis kann aber auch chemisch vernetzt sein.
In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.% betragen.

Eine Klebemasse, die sich als besonders geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

In einer weiteren Ausführungsform der Erfindung basiert die Klebemasse auf Polyethylenvinylacetat (EVA) mit einem Vinylacetatanteil von 40 bis 90 Gew.-% und mit einem Schmelzindex MFI nach ISO 1133 (A/4) von 0,5 bis 25 g/10 min bei 190 °C und 2,16 kg.
Da es sich um ein chemisch unvernetztes Polymergerüst handelt, das aufgrund seines Monomerverhältnisses nur sehr schwach bis gar nicht kristallin ist, nimmt das Molekulargewicht, das direkt mit dem MFI korreliert, eine entscheidende Stellung in Bezug auf die Kohäsivität der Klebmasse ein. Ein MFI von 1 bis 5 g/10 min bei 190 °C und 2,16 kg hat sich dabei als günstiger Wert erwiesen. Die Zumischung eines Teils des EVAs mit einem MFI von bis zu 25 kann aber zur Fließeigenschaftsverbesserung beitragen, wenn die Klebmasse aus der Schmelze aufgebracht wird.

Eine Strahlenvernetzung nach der Aufbringung der Klebmasse, insbesondere durch Elektronenstrahlhärtung, ist zur Steigerung der Kohäsion und zur Vermeidung von schrumpfbedingten Rückständen möglich.

Die Klebmasse kann zur Erzielung ergänzender gewünschter Eigenschaften abgemischt sein mit einem oder mehreren Additiven wie Klebharzen, Weichmachern, Alterungsschutzmitteln oder Füllstoffen.

Klebharze zur Steigerung der adhäsiven Eigenschaften des Klebers sind beispielsweise Kohlenwasserstoffharze (zum Beispiel aus ungesättigten C₅- oder C₇-Monomeren), Terpenphenolharze, Terpenharze aus Rohstoffen wie α- oder ß-Pinen, aromatische Harze wie Cumaron-Inden-Harze oder Harze aus Styrol oder α-Methylstyrol, bevorzugt aber Kolophonium und seine Folgeprodukte wie disproportionierte, dimerisierte oder veresterte Harze, wobei Glycole, Glycerin oder Pentaerythrit zur Veresterung eingesetzt werden können sowie weitere wie aufgeführt in Ullmann`s Enzyklopädie der technischen Chemie, Band 12, Seiten 525 bis 555 (4. Auflage), Weinheim. Besonders geeignet sind alterungsstabile Harze ohne olefinische Doppelbindung wie zum Beispiel hydrierte Harze.

Optional zu verwendende Weichmacher sind beispielsweise aliphatische, cycloaliphatische und aromatische Mineralöle, Di- oder Poly-Ester der Phthalsäure, Trimellitsäure oder Adipinsäure, Polyether sowie flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Um die Klebmasse noch beständiger gegen UV-Einfluss zu machen, ist der Zusatz von Lichtschutzmitteln möglich. Ihre Funktion besteht vorrangig in der Vermeidung der Zersetzung der Klebmasse. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Klebmasse geeignet.

Geeignete Füllstoffe und Pigmente sind beispielsweise Ruß, Titandioxid, Calciumcarbonat, Zinkcarbonat, Zinkoxid, Silicate oder Kieselsäure.

Bevorzugt ist sodann eine Haftklebemasse auf Basis eines oder mehrerer Blockcopolymere, wobei weiter vorzugsweise zumindest ein Blockcopolymer zumindest teilweise auf Basis von (Meth-)Acrylsäurederivaten zusammengesetzt ist, wobei das zumindest eine Blockcopolymer mindestens die Einheit P(A)-P(B)-P(A) aus wenigstens einem Polymerblock P(B) und wenigstens zwei Polymerblöcken P(A) aufweist, wobei
- P(A) unabhängig voneinander Homo- oder Copolymerblöcke mindestens zu 75 Gew.-% aus Monomeren der Gruppe A repräsentieren, wobei die (Co-)Polymerblöcke P(A) jeweils eine Erweichungstemperatur im Bereich von 0 °C bis + 175 °C aufweisen,
- P(B) einen Homo- oder Copolymerblock aus Monomeren der Gruppe B repräsentiert, wobei der (Co-)Polymerblock P(B) eine Erweichungstemperatur im Bereich von - 130 °C bis + 10 °C aufweist,
- die (Co-)Polymerblöcke P(A) und P(B) bei 25 °C nicht homogen miteinander mischbar sind.

Es ist weiterhin von Vorteil, wenn das beziehungsweise die Blockcopolymere zumindest zu 50 Gew.% in der Haftklebemasse vorliegen.

Als vorteilhaft haben sich Haftklebemassen herausgestellt, bei denen der Aufbau des Blockcopolymers / der Blockcopolymere durch eine oder mehrere der folgenden allgemeinen Formeln beschrieben werden kann:

P(A)-P(B)-P(A) (I)

P(B)-P(A)-P(B)-P(A)-P(B) (II)

[P(A)-P(B)]nX (III)

[P(A)-P(B)]nX[P(A)]m (IV),

wobei n = 3 bis 12, m = 3 bis 12 und X eine multifunktionelle Verzweigungseinheit darstellt, also ein chemisches Bauelement, über das verschiedene Polymerarme miteinander verknüpft sind, wobei weiterhin die Polymerblöcke P(A) unabhängig voneinander Homo- oder Copolymerblöcke mindestens zu 75 Gew.% aus Monomeren der Gruppe A repräsentieren, wobei die Polymerblöcke P(A) jeweils eine Erweichungstemperatur im Bereich von 0 °C bis + 175 °C aufweisen und wobei die Polymerblöcke P(B) unabhängig voneinander Homo- oder Copolymerblöcke aus Monomeren der Gruppe B repräsentieren, wobei die Polymerblöcke P(B) jeweils eine Erweichungstemperatur im Bereich von - 130 °C bis + 10 °C aufweisen.

Bei den Polymerblöcken P(A) kann es ich um Polymerketten einer einzigen Monomersorte aus der Gruppe A oder um Copolymere aus Monomeren verschiedener Strukturen aus der Gruppe A handeln, gegebenenfalls um Copolymere mindestens zu 75 Gew.% aus Monomeren der Gruppe A und zu bis zu 25 Gew.-% aus Monomeren der Gruppe B. Insbesondere können die eingesetzten Monomere aus der Gruppe A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.
Im Sinne dieser Schrift soll der Begriff "Polymerblöcke" somit sowohl Homo- als auch Copolymerblöcke einschließen, soweit nicht etwas anderes im Einzelfall spezifiziert wird.

Die Einheit P(A)-P(B)-P(A) kann dabei sowohl symmetrisch [entsprechend P1(A)-P(B)-P2(A) mit P1(A) = P2(A)] als auch unsymmetrisch [etwa entsprechend der Formel P3(A)-P(B)-P4(A) mit P3(A) ≠ P4(A), wobei aber sowohl P3(A) als auch P4(A) jeweils Polymerblöcke im Sinne der Definition für P(A) seien] aufgebaut sein.
Vorteilhaft ist es, wenn die Blockcopolymere einen symmetrischen Aufbau derart aufweisen, dass in der Kettenlänge und/oder der chemischen Struktur identische Polymerblöcke P(A) und/oder dass in der Kettenlänge und/oder der chemischen Struktur identische Polymerblöcke P(B) vorliegen.
P3(A) und P4(A) können sich insbesondere in ihrer chemischen Zusammensetzung und/oder ihrer Kettenlänge unterscheiden.

Geeignete Monomere der Gruppe A enthalten eine C=C-Doppelbindung, insbesondere eine oder mehrere Vinylgruppen im eigentlichen Sinne und/oder vinylähnliche Gruppen. Als vinylähnliche Gruppen werden hier solche Gruppen bezeichnet, bei der die Wasserstoffatome der ungesättigten C-Atome teilweise oder vollständig durch organische und/oder anorganische Reste substituiert sind. In diesem Sinne zählen auch Acrylsäure, Methacrylsäure und/oder deren Derivate zu den vinylähnliche Gruppen aufweisenden Verbindungen. Vorstehende Verbindungen werden im Weiteren zusammenfassend als Vinylverbindungen bezeichnet.
Vorteilhafte Beispiele für Verbindungen, welche als Monomere der Gruppe A eingesetzt werden, sind Vinylaromaten. Konkrete Monomere, deren Aufzählung aber nur beispielhaft ist, sind zum Beispiel Styrol, α-Methylstyrol, o-Methylstyrol, o-Methoxystyrol, p-Methoxystyrol oder 4-Methoxy-2-methylstyrol.
Weiterhin lassen sich als Monomere der Gruppe A vorteilhaft Acrylate, wie zum Beispiel mit Acrylat terminiertes Polystyrol oder α-Bromphenylacrylat, einsetzen, und/oder Methacrylate, wie zum Beispiel mit Methacrylat terminiertes Polystyrol (beispielsweise Methacromer PS 12 der Firma Polymer Chemistry Innovations), 1,2-Diphenylethylmethacrylat, Diphenylmethylmethacrylat, o-Chlorbenzylmethacrylat, p-Bromphenyl-methacrylat, und/oder Acrylamide, wie zum Beispiel N-Benzylmethacrylamid.
Die Monomere können auch in Gemischen miteinander eingesetzt werden. Konkrete Beispiele für derartige Comonomere ohne Anspruch auf Vollständigkeit sind o-Cresylmethacrylat, Phenylmethacrylat, Benzylmethacrylat oder o-Methoxyphenylmethacrylat.
Weiterhin können die Polymerblöcke P(A) aber auch derart als Copolymere aufgebaut sein, dass sie zu mindestens 75 % aus den vorstehenden Monomeren der Gruppe A oder einem Gemisch dieser Monomere bestehen können, was zu einer hohen Erweichungstemperatur führt, aber bis zu 25 % auch Monomere der Gruppe B enthalten können, was zu einer Erniedrigung der Erweichungstemperatur des Polymerblocks P(A) führt. In diesem Sinne seien beispielhaft Alkylacrylate genannt, die entsprechend der Struktur B1 und dem hierzu gesagten definiert sind.

Monomere der Gruppe B für den Elastomerblock P(B) werden vorteilhaft ebenfalls so gewählt, dass sie C=C-Doppelbindungen (besonders Vinylgruppen und vinylähnliche Gruppen) aufweisen.
Als Monomere der Gruppe B werden vorteilhaft Acrylatmonomere eingesetzt. Hierfür sind prinzipiell alle dem Fachmann geläufigen Acrylatverbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen. Entsprechend können bevorzugt Vinylmonomere gewählt werden.

Für die Präparation der Polymerblöcke P(B) werden vorteilhaft zu 75 bis 100 Gew.% Acrylsäure- und/oder Methacrylsäurederivate der allgemeinen Struktur

CH2=CH(R1)(COOR2) (B1)

eingesetzt, wobei R1 = H oder CH3 und R2 = H oder lineare, verzweigte oder ringförmige, gesättigte oder ungesättigte Kohlenwasserstoffketten mit 1 bis 30, insbesondere mit 4 bis 18 Kohlenstoffatomen darstellt,
und bis zu 25 Gew.% an Monomeren (B2) aus der Gruppe der Vinylverbindungen, wobei diese Monomere B2 günstigenfalls funktionelle Gruppen enthalten.
Die vorstehenden Gewichtsprozentangaben addieren sich bevorzugt zu 100 %, die Summe kann aber auch weniger als 100 Gew.-% betragen, sofern weitere (polymerisierbare) Monomere vorhanden sind.

Acrylmonomere der Gruppe B, die im Sinne der Verbindung B1 als Komponenten für Polymerblöcke P(B) eingesetzt werden, umfassen Acryl- und Methacrylsäureester mit Alkyl-, Alkenyl- und/oder Alkinylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie zum Beispiel 2-Ethylhexylacrylat und Isooctylacrylat sowie cyclische Monomere wie zum Beispiel Cyclohexyl- oder Norbornylacrylat und Isobornylacrylat.

Weiterhin können optional als Monomere B2 für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Cyclen und Heterocyclen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne von B2 für den Elastomerblock P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

Sämtliche einsetzbaren Monomere können ebenfalls in einer halogenierten Form verwendet werden.

Bei weiteren vorteilhaften Ausführungsformen der Haftklebemasse beinhaltet diese einen Blend aus
- zumindest einem Diblockcopolymer mit zumindest einem Triblockcopolymer, oder
- zumindest einem Diblockcopolymer mit zumindest einem sternförmigen Blockcopolymer,
- zumindest einem Triblockcopolymer mit zumindest einem sternförmigen Blockcopolymer,
wobei bevorzugt zumindest eine der vorgenannten Komponenten, vorteilhaft alle Blockcopolymer-Komponenten des Blends solche Blockcopolymere im Sinne der obigen Definition darstellen.

Ein Vorteil der Klebemasse ist darin zu erkennen, dass die Klebemasse während des Verklebevorgangs erlaubt, dass zwischen Klebemasse und Objekt befindliche Luft austreten kann. So werden Lufteinschlüsse annähernd vollständig vermieden. Darüber hinaus entstehen wenig Lücken oder Fehlstellen, durch die wieder Luft- oder Wasserdampf eintreten und so inner- oder unterhalb der Klebemasse an die elektrochrome Schicht wandern könnten.

In einer weiteren vorteilhaften Ausführungsform ist das Klebeband nicht transparent und bietet dem zu schützenden Substrat einen Schutz vor Strahlung insbesondere UV-Strahlung.

Das erfindungsgemäße Klebeband kann auf verschiedenen Wegen hergestellt werden.

Einerseits kann dies geschehen durch Beschichtung des Trägers aus einer Lösung der Klebmasse oder durch Beschichtung aus der Schmelze, wobei letzteres durch Extrudieren oder durch Kalandrieren erfolgen kann.
Als dritter Weg kann die Klebmasse im Transferverfahren auf den Träger aufgebracht werden. Dabei wird die Klebmasse zunächst aus Lösung oder als Schmelze auf einen intermediären Träger aufgetragen und anschließend durch einen Kaschierschritt mit dem Trägermaterial mit Barrierewirkung verbunden.

Die Klebmasse kann in einem, vorteilhaft aber auch in mehreren Schritten aufgebracht werden. So können die in verschiedenen Schritten aufgebrachten Klebmasseschichten unterschiedliche Funktionen ausüben, indem sie unterschiedlich additiviert sind.

So kann etwa der Basisauftrag auf dem Träger mit einem lichtabsorbierenden Pigment, zum Beispiel Ruß, versehen sein, und so die in weiteren Schritten aufgebrachte Klebmasse vor direkter Strahlung schützen. Wahlweise kann auch die Abschlussschicht, die Kontakt zum Haftgrund hat, mit Klebharzen abgemischt sein, während die Basisschicht nicht oder anders additiviert ist. Oben genannte Beispiele stellen keine Einschränkung dar, sondern stehen stellvertretend für alle denkbaren Kombinationen, die im Sinne des Erfindungsgedanken sind.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Letzteres bietet sich besonders zum Herstellen von entsprechend dem Anwendungszweck formgestanzten Aufklebern an.

Die verwendeten Klebemassen beeinflussen die Funktion der einzelnen Schichten nicht. Sie sind weitestgehend frei von migrierenden Stoffen, insbesondere solchen, die den Ionentransport zwischen den einzelnen Schichten behindern. Hier sind besonders zu nennen ein- und zweiwertige Metallionen, Säuren und Laugen, sowie alle migrierenden, verfärbenden Substanzen, die sich zwischen den Schichtsystem anreichern können.

Die Klebmasse auf der metallischen Schicht sowie gegebenenfalls auf der Folienschicht weist zum sicheren Verkleben eine Schichtdicke von 10 µm bis 200 µm auf, insbesondere von 20 µm bis 100 µm, besonders vorteilhafterweise von 40 µm bis 80 µm.

Die Klebemasse kann direkt mittels eines Streichbalkens aus der Lösung beschichtet werden. Das verwendete Lösungsmittel wird in diesem Fall anschließend in einem handelsüblichen Trockenkanal verdampft. Ebenso ist eine lösungsmittelfreie Beschichtung mittels einer Düsen- oder Walzenbeschichtungsanlage geeignet.
Mit beiden Beschichtungstechnologien ist für besonders empfindliche Schichten eine so genannte indirekte Beschichtung zu empfehlen. Hierbei wird die zu beschichtende Klebemasse nicht direkt auf die jeweilige Schicht beschichtet, sondern erst auf eine Trennfolie oder ein Trennpapier und im Anschluss mittels einer Walzenkaschierung zum eigentlichen Träger gefügt.
Die Klebemassen können noch mit Abdeckpapieren oder -folien eingedeckt sein.

Gerade bei der Spiegelherstellung sind hohe Anforderungen an die Verbundstoffe der Spiegel gestellt werden. Diese werden in der GDS 10.000.001-00 aufgeführt. Ferner sind diverse Gesetze zu berücksichtigen. Hervorzuheben ist die Eignung als Sicherheitsbelag für das Spiegelglas, welcher durch eine Kugelfallprüfung getestet wird. Weitere Eckpunkte sind Stress- und Lagertest bei unterschiedlichen Belastungen, beispielsweise unterschiedlichen Klimazonen, Reizklima, Temperaturen und Luftfeuchtigkeit sowie die Einwirkung von UV-Stabilisatoren. Alle Anforderungen werden seitens des erfindungsgemäßen Klebebands erfüllt.

Daneben lässt es sich auch hervorragend einsetzen zum Schutz von Displays, von (flexiblen) Solarzellen, von Elektrolumineszenz-Lampen.

Als doppelseitiges Klebeband dient es neben dem Schutz zum gleichzeitigen Fixieren von Gegenständen.

Das erfindungsgemäße Klebeband kann als endlose Rolle, die in Form einer archimedischen Spirale um zumeist eine Papp- oder Kunstoffhülse aufgewickelt ist, und als gestanztes Etikett dargeboten werden. Letzteres kann jede beliebige Gestalt aufweisen, dem jeweiligen Einsatzzweck hervorragend angepasst.

Anhand der nachfolgend beschriebenen Figur wird die Erfindung näher erläutert, ohne damit diese unnötig einschränken zu wollen.

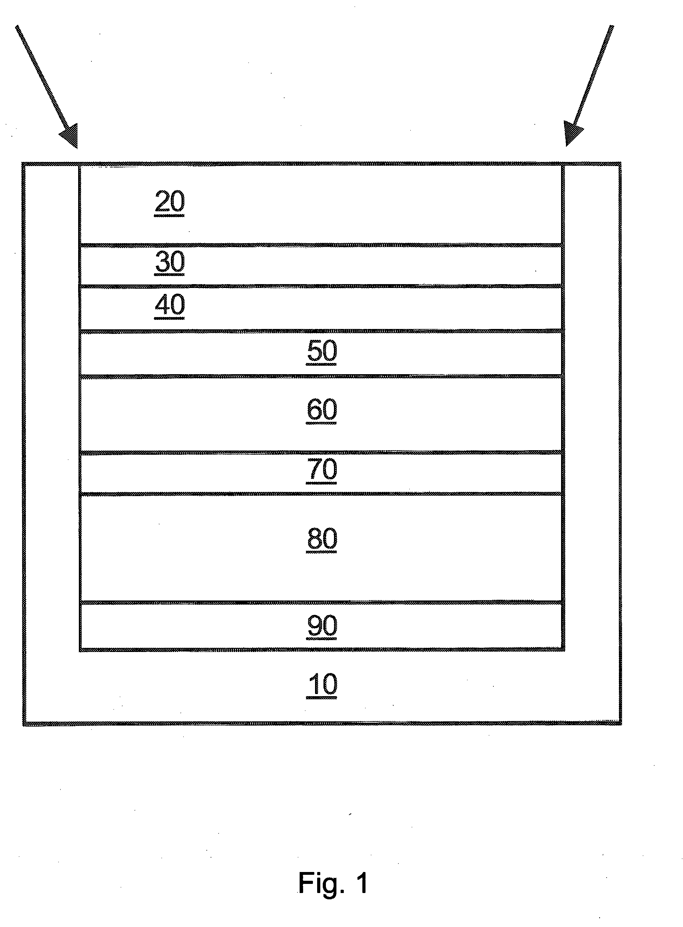

Es zeigt
- Figur 1: das Klebeband im seitlichen Schnitt, wie es in einem Spiegelgehäuse verklebt ist.

In der Figur 1 ist dargestellt, wie das erfindungsgemäße Klebeband in einem Spiegelgehäuse 10 verklebt ist. Die ersten drei Schichten 20, 30, 40 bilden einen Teil des Spiegels beginnend mit der Glasschicht, auf die die elektrochrome Schicht 30 aufgebracht ist, die von einer Aluminiumschicht 40 abgedeckt ist.
Die elektrochrome Schicht 30 setzt sich aus folgenden, nicht im Einzelnen gezeigten Schichten zusammen
- transparente Elektrode aus zum Beispiel Indium-Zinnoxid (ITO)
- elektrochrome Schicht (1) aus Nickelhydroxit
- Isolierschicht aus Tentalpentoxit
- elektrochrome Schicht (2) aus Wolframoxid

Zum Schutz der elektrochromen Schicht 30 dient das erfindungsgemäße Klebeband, das den folgenden Aufbau aufweist:
Die Klebemasse 50 dient dazu, das Klebeband auf der Aluminiumschicht 40 zu fixieren. Der Träger selbst besteht aus einem unteren Folienteil 60 (Kunststofffolie aus Polyester), eine metallische Schicht 70 aus Aluminium, ein oberer Folienteil 80 (Kunststofffolie aus Polypropylen).

Um wiederum das Klebeband sicher im Spiegelgehäuse 10 zu fixieren, ist auf dem oberen Folienteil 80 eine zweite Klebemasse 90 vorhanden, die die Verbindung zum Spiegelgehäuse 10 sicherstellt.

Mit den Pfeilen ist angedeutet, an welchen Stellen Luft- und/oder Wasserdampf zwischen Glas 20 und Spiegelgehäuse 10 eindringt. Wäre die elektrochrome Schicht 30 nun nicht mittels des erfindungsgemäßen Klebebands gegen Angriffe derselben geschützt, würde es früher oder später zu einem Versagen der elektrochromen Schicht kommen.

Im Folgenden soll die Erfindung anhand eines Beispiels näher beschrieben werden, ohne damit die Erfindung unnötig einschränken zu wollen.

### Beispiel

Eine Selbstklebemasse aus einem Polyethylenvinylacetat-Harz Gemisch, bestehend aus 66 Gew.-Teilen Polyethylenvinylacetat mit einem Vinylacetatgehalt von 45 Mol-% und einem Schmelzindex von 15 bis 35 g/10 min (190 °C / 2,2N nach ISO 1133) und 33 Gew.-Teilen eines Klebharz vom Typ Glycerinester des hydrierten Kolophoniums mit einem Erweichungsbereich von 80 °C bis 110 °C, wird 40 Gew.-%ig in Toluol gelöst und in einer Beschichtungsanlage mit Streichbalken und Trocknungskanal auf einen 600 mm breiten Verbund mit 250 µm aufgetragen.

Der Verbund setzt sich zusammen aus einer 23 µm dicken Polyester-Folie, auf der eine 82 µm dicke Polypropylenfolie mit 1 Gew.-% TiO₂ vorhanden ist, auf die eine 20 µm starke Aluminiumfolie aufgetragen ist.

Die Trocknungstemperatur beträgt 80 °C bei einer Verweilzeit von 3 Minuten.
Nach der Trocknung beträgt die Schichtdicke des aufgebrachten Klebers 50 µm.
Das Material wird auf der klebenden Seite mit einer 36µm starken, silikonisierten Trennfolie eingedeckt und zu einem Ballen gewickelt.

| | | |
|---|---|---|
| Produktdicke | µm | 211 |
| Klebkraft auf Glas sofort | N/cm | > 3 |
| Klebkraft auf Glas 5 min 80°C | N/cm | > 4,5 |
| Wasserdampfdichte | g/m²/24h | < 0,03 |

Eine Dichte gegen Wasserdampf von unter 0,03 g/m²/24h zeigt die hervorragende Barrierewirkung des erfindungsgemäßen Klebebands gegen Wasserdampf.

Erfindungsgemäß verwendbare Klebemassen sind ebenso ohne Lösungsmittel herstellbar, des Weiteren unter Verwendung eines Extruders oder einer Walze.
Ebenso sind die Acrylatdispersionen Primal DS 83 von Rohm und Haas und Acronal als Hotmelt von BASF einsetzbar und haben gute Ergebnisse gezeigt.

## Patentansprüche

1. Verwendung eines zum Schutz von Elektrochromenschichtsystemen geeigneten Klebebands mit einem mehrschichtigen Träger zum Schutz von flächenförmigen Funktionsschichten wie elektrochromen Schichten, elektrolumeszierenden Schichten und/oder OLEDs (Organic Light Emitting Devices, organische Kunststoffe als Leuchtschicht für Handy- und Kameradisplays), insbesondere zum Schutz von Elektrochromenschichtsystemen auf Spiegeln, wobei der mehrschichtige Träger besteht aus zumindest einem oberen und einem unteren Folienteil, der jeweils von zumindest einer Kunststofffolie gebildet wird, wobei die Kunststofffolie des oberen Folienteils aus Polyester, Polyolefin, PUR, PVC, PVDC, PEN, PAN, EVOH, PA oder PA mit Nanokomposits besteht, sowie einem zwischen dem oberen und dem unteren Folienteil befindlichen metallischen Teil, der aus einer metallischen Schicht in Form einer Metallfolie aus insbesondere Aluminium gebildet wird, wobei auf der freiliegenden Seite des unteren Folienteils eine Klebemasse aufgebracht ist. *.*

2. Verwendung nach Anspruch 1, **dadurch gekennzeichnet, dass** der obere Folienteil eine Kunststofffolie aus Polyester,
die metallische Schicht eine Aluminiumschicht und/oder
der untere Folienteil eine Kunststofffolie aus Polyolefinen, bevorzugt Polypropylen, oder Polyester ist.

3. Verwendung nach Anspruch 1, **dadurch gekennzeichnet, dass** der obere Folienteil eine Kunststofffolie aus Polyolefinen, bevorzugt Polypropylen,
die metallische Schicht eine Aluminiumschicht und/oder
der untere Folienteil eine Kunststofffolie aus Polyester ist.

4. Verwendung nach Anspruch 1, **dadurch gekennzeichnet, dass**
die Folienteile jeweils von einem Laminat aus Kunststofffolien gebildet werden, bevorzugt ein Laminat aus einer Polyesterfolie sowie aus einer Polyolefinfolie.

5. Verwendung nach Anspruch 4, **dadurch gekennzeichnet, dass**
die beiden Folienteile jeweils aus einem Laminat aus einer Polyesterfolie sowie aus einer Polyolefinfolie, bevorzugt Polypropylenfolie, bestehen und so angeordnet sind, dass der Träger einen symmetrischen Aufbau um die metallische Schicht aufweist.

6. Verwendung nach zumindest einem der vorherigen Ansprüche, **dadurch gekennzeichnet, dass**
die metallische Schicht eine Metallfolie ist.

7. Verwendung nach zumindest einem der vorherigen Ansprüche, **dadurch gekennzeichnet, dass**
auf dem oberen Folienteil weitere Schichten angeordnet sind, gewählt aus der Gruppe Kunststofffolien, metallisierte Kunststofffolien, Metallfolien.

8. Verwendung nach zumindest einem der vorherigen Ansprüche, **dadurch gekennzeichnet, dass**
der Träger folgenden Aufbau aufweist:
unterer Folienteil Polyesterfolie, oberer Folienteil Polypropylenfolie, metallische Schicht Aluminiumschicht, die auf die Polyesterfolie des unteren Folienteils aufgebracht ist, wobei auf dem oberen Folienteil folgende weitere Schichten in der angegebenen Reihenfolge aufgebracht sind:
Polypropylenfolie, Polyesterfolie mit aufgebrachter Aluminiumschicht, wobei die Aluminiumschicht derart angeordnet ist, dass diese an der Polypropylenfolie anliegt.

9. Verwendung nach zumindest einem der vorherigen Ansprüche, **dadurch gekennzeichnet, dass**
der Träger folgenden Aufbau aufweist:
unterer Folienteil Laminat aus einer Polypropylen- und einer Polyesterfolie, wobei das Laminat derart angeordnet ist, dass die Klebemasse auf die Polypropylenfolie aufgebracht ist, oberer Folienteil Polyesterfolie, metallische Schicht Aluminiumschicht, die auf die Polyesterfolie des unteren Folienteils aufgebracht ist,
wobei auf dem oberen Folienteil folgende weitere Schichten in der angegebenen Reihenfolge aufgebracht sind:
zweite Aluminiumschicht, die auf der Polyesterfolie des oberen Folienteil aufgebracht ist, zweite Polypropylenfolie, wobei die zweite Aluminiumschicht derart angeordnet ist, dass diese an der zweiten Polypropylenfolie anliegt.

10. Verwendung nach zumindest einem der vorherigen Ansprüche, **dadurch gekennzeichnet, dass**
das Klebeband nicht transparent ist.

11. Verwendung nach zumindest einem der vorherigen Ansprüche, **dadurch gekennzeichnet, dass**
auf der äußersten oberen Lage des Trägers eine zweite Klebemasse oder ein doppelseitig klebendes Klebeband aufgebracht ist.

12. Verwendung nach zumindest einem der vorherigen Ansprüche, **dadurch gekennzeichnet, dass**
die Klebemasse auf Acrylatpolymeren, auf Acrylatblockcopolymer aus Lösung beschichtet, auf einer Acrylatdispersion oder auf Polyethylenvinylacetatpolymeren basiert.

## Claims

1. Use of an adhesive tape suitable for protecting electrochromic layer systems and having a multilayer carrier for protecting substantially two-dimensional functional layers such as electrochromic layers, electroluminescent layers and/or OLEDs (organic light-emitting devices, organic polymers as luminescent layer for cell phone and camera displays), especially for protecting electrochromic layer systems on mirrors, the multilayer carrier consisting of at least one top and one bottom film part, each formed by at least one polymeric film, the polymeric film of the top film part consisting of polyester, polyolefin, PU, PVC, PVDC, PEN, PAN, EVOH, PA or PA with nanocomposites, and also at least one metallic part, which is located between the top and bottom film parts and is formed from a metallic layer in the form of a metal foil of, in particular, aluminum, the exposed side of the bottom film part carrying an adhesive.

2. Use according to Claim 1, **characterized in that** the top film part is a polymeric film of polyester, the metallic layer is an aluminum layer and/or the bottom film part is a polymeric film of polyolefins, preferably polypropylene, or polyester.

3. Use according to Claim 1, **characterized in that** the top film part is a polymeric film of polyolefins, preferably polypropylene, the metallic layer is an aluminum layer and/or the bottom film part is a polymeric film of polyester.

4. Use according to Claim 1, **characterized in that** the film parts are each formed from a laminate of polymeric films, preferably a laminate of a polyester film and of a polyolefin film.

5. Use according to Claim 4, **characterized in that** the two film parts are each composed of a laminate of a polyester film and of a polyolefin film, preferably polypropylene film, and are disposed such that the carrier has a symmetrical construction around the metallic layer.

6. Use according to at least one of the preceding claims, **characterized in that** the metallic layer is a metal foil.

7. Use according to at least one of the preceding claims, **characterized in that** the top film part bears further layers selected from the group consisting of polymeric films, including metallized polymeric films, and metal foils.

8. Use according to at least one of the preceding claims, **characterized in that** the carrier has the following construction:
bottom film part polyester film, top film part polypropylene film, metallic layer aluminum layer carried on the polyester film of the bottom film part, the top film part carrying the following additional layers in the stated order:
polypropylene film, polyester film with applied aluminum layer, the aluminum layer being disposed in such a way that it lies against the polypropylene film.

9. Use according to at least one of the preceding claims, **characterized in that** the carrier has the following construction:
bottom film part laminate of a polypropylene film and a polyester film, the laminate being disposed such that the adhesive is carried on the polypropylene film, top film part polyester film, metallic layer aluminum layer carried on the polyester film of the bottom film part, the top film part carrying the following additional layers in the stated order:
second aluminum layer, carried on the polyester film of the top film part, second polypropylene film, the second aluminum layer being disposed in such a way that it lies against the second polypropylene film.

10. Use according to at least one of the preceding claims, **characterized in that** the adhesive tape is not transparent.

11. Use according to at least one of the preceding claims, **characterized in that** the outermost top ply of the carrier carries a second adhesive or a double-sidedly adhesive tape.

12. Use according to at least one of the preceding claims, **characterized in that** the adhesive is based on acrylate polymers, on acrylate block copolymer coated from solution, on an acrylate dispersion or on polyethylene-vinyl acetate polymers.

## Revendications

1. Utilisation d'une bande adhésive appropriée pour la protection de systèmes à couches électrochromes présentant un support multicouche pour la protection de couches fonctionnelles planes, telles que des couches électrochromes, des couches électroluminescentes et/ou des OLED (Organic Light Emitting Devices, matériaux synthétiques organiques en tant que couche luminescente pour les affichages de téléphones portables et de caméras) en particulier pour la protection de systèmes à couches électrochromes sur des miroirs, le support multicouche étant constitué d'au moins une partie de feuille supérieure et une partie de feuille inférieure, qui sont à chaque fois formées d'au moins une feuille en matériau synthétique, la feuille en matériau synthétique de la partie de feuille supérieure étant constituée de polyester, de polyoléfine, de PUR, de PVC, de PVDC, de PEN, de PAN, d'EVOH, de PA ou de PA présentant des nanocomposites, ainsi que d'une partie métallique se trouvant entre la partie de feuille supérieure et la partie de feuille inférieure, qui est formée par une couche métallique sous forme d'une feuille métallique en particulier en aluminium, une masse adhésive étant appliquée sur la face libre de la partie de feuille inférieure.

2. Utilisation selon la revendication 1, **caractérisée en ce que** la partie de feuille supérieure est une feuille en matériau synthétique en polyester, la feuille métallique est une couche d'aluminium et/ou la partie de feuille inférieure est une feuille en matériau synthétique en polyoléfines, de préférence en polypropylène, ou en polyester.

3. Utilisation selon la revendication 1, **caractérisée en ce que** la partie de feuille supérieure est une feuille en matériau synthétique en polyoléfines, de préférence en polypropylène, la couche métallique est une couche d'aluminium et/ou la partie de feuille inférieure est une feuille en matériau synthétique en polyester.

4. Utilisation selon la revendication 1, **caractérisée en ce que** les parties de feuille sont à chaque fois formées par un stratifié en feuilles en matériau synthétique, de préférence un stratifié en une feuille en polyester ainsi qu'en une feuille en polyoléfine.

5. Utilisation selon la revendication 4, **caractérisée en ce que** les deux parties de feuille sont à chaque fois constituées par un stratifié en une feuille en polyester ainsi qu'en une feuille en polyoléfine, de préférence une feuille en polypropylène et disposées de manière telle que le support présente une structure symétrique autour de la couche métallique.

6. Utilisation selon au moins l'une quelconque des revendications précédentes, **caractérisée en ce que** la couche métallique est une feuille métallique.

7. Utilisation selon au moins l'une quelconque des revendications précédentes, **caractérisée en ce que** d'autres couches, choisies dans le groupe des feuilles en matériau synthétique, des feuilles en matériau synthétique métallisées, des feuilles en métal, sont disposées sur la partie de feuille supérieure.

8. Utilisation selon au moins l'une quelconque des revendications précédentes, **caractérisée en ce que** le support présente la structure suivante :
partie de feuille inférieure feuille en polyester, partie de feuille supérieure feuille en polypropylène, couche métallique couche d'aluminium, qui est appliquée sur la feuille en polyester de la partie de feuille inférieure, les autres couches suivantes étant appliquées dans l'ordre indiqué sur la partie de feuille supérieure :
feuille en polypropylène, feuille en polyester présentant une couche d'aluminium appliquée, la couche d'aluminium étant disposée de manière à être adjacente à la feuille en polypropylène.

9. Utilisation selon au moins l'une quelconque des revendications précédentes, **caractérisée en ce que** le support présente la structure suivante :
partie de feuille inférieure stratifié en une feuille en polypropylène et une feuille en polyester, le stratifié étant disposé de manière telle que la masse adhésive est appliquée sur la feuille en polypropylène, partie de feuille supérieure feuille en polypropylène, couche métallique couche d'aluminium, qui est appliquée sur la feuille en polyester de la partie de feuille inférieure, les autres couches suivantes étant appliquées dans l'ordre indiqué sur la partie de feuille supérieure :
deuxième couche d'aluminium, qui est appliquée sur la feuille en polyester de la partie de feuille supérieure, deuxième feuille en polypropylène, la deuxième couche d'aluminium étant disposée de manière à être adjacente à la deuxième feuille en polypropylène.

10. Utilisation selon au moins l'une quelconque des revendications précédentes, **caractérisée en ce que** la bande adhésive n'est pas transparente.

11. Utilisation selon au moins l'une quelconque des revendications précédentes, **caractérisée en ce qu'**une deuxième masse adhésive ou une bande adhésive double face est appliquée sur la couche supérieure la plus extérieure du support.

12. Utilisation selon au moins l'une quelconque des revendications précédentes, **caractérisée en ce que** la masse adhésive est à base de polymères d'acrylate, de copolymère à blocs d'acrylate revêtu à partir d'une solution, à base d'une dispersion d'acrylate ou de polymères de poly(éthylène-acétate de vinyle).
